# EUROPÄISCHE PATENTSCHRIFT

(11) **EP 1 328 741 B1**
(45) Veröffentlichungstag und Bekanntmachung des Hinweises auf die Patenterteilung: **12.05.2004**
(21) Anmeldenummer: 01992849.8
(22) Anmeldetag: 20.10.2001
(51) Int. Cl.: F16H 49/00

(54) **WELLGETRIEBE MIT TOPFFÖRMIGEM ABTRIEBSRING IM STÜTZRING**
SHAFT GEAR COMPRISING A CUP-SHAPED OUTPUT RING IN A BEARING RING
REDUCTEUR PLANETAIRE PRESENTANT UNE COURONNE MENEE EN FORME DE POT DANS UNE COURONNE D'APPUI

(30) Priorität: 24.10.2000 DE 10052649
(43) Veröffentlichungstag der Anmeldung: 23.07.2003
(73) Patentinhaber: Oechsler Aktiengesellschaft, 91522 Ansbach (DE)
(72) Erfinder: POEHLAU, Frank., 90762 Fuerth (DE)
(86) Internationale Anmeldenummer: PCT/EP2001/012149
(87) Internationale Veröffentlichungsnummer: WO 2002/036992

(56) Entgegenhaltungen:
- FR-A- 1 552 512
- US-A- 3 178 963
- US-A- 4 382 391

## Beschreibung

Die Erfindung betrifft ein Wellgetriebe gemäß dem Oberbegriff des Anspruches 1.

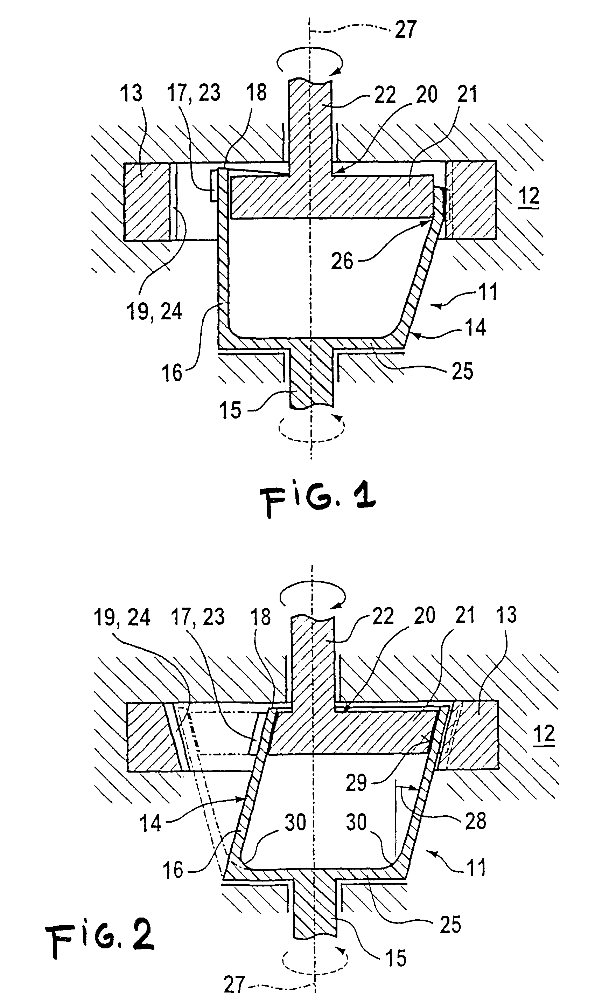

Ein solches auch als Harmonic Drive bekanntes Getriebe ist etwa in der Zeitschrift CON-TROL ENGINEERING, Heft Dezember 1964 auf Seite 69 in Fig.1, gezeigt. Die Funktion dieses sehr stark untersetzenden, selbsthemmenden Systems mit zur Antriebswelle koaxialer Abtriebswelle beruht darauf, daß ein exzentrisch rotierender sogenannter Well-Generator den offenen Stirnrand des topfförmigen Abtriebsringes (nachstehend als Abtriebstopf bezeichnet) umlaufend radial nach außen verformt und dadurch einen auch als Flexband zu bezeichnenden ringförmigen Umfangsbereich mit seiner Außenmantelfläche umlaufend lokal nach außen gegen die hohlzylindrische Innenmantelfläche geringfügig größeren Umfangs eines gehäusefest stationären formstabilen Stützringes andrückt. Infolgedessen wälzt sich der Abtriebstopf mit seinem Flexband kraftschlüssig über Reibflächen oder formschlüssig über Verzahnungen im Stützring ab, so daß der Abtriebstopf sich nach Maßgabe der nur geringen Umfangsdifferenz sehr viel langsamer als der gewöhnlich hochtourig motorisch angetriebene Well-Generator dreht und ein entsprechend viel größeres Drehmoment aufzubringen imstande ist. Diese gegenüber dem Antrieb stark untersetzte Drehbewegung wird z.B. über einen den Abtriebstopf tragenden Wellenstumpf durch ein Lagerschild hindurch aus dem Getriebe-Gehäuse heraus nach außen übertragen. Ein solches Wellgetriebe findet, gewöhnlich in Kombination mit einem kleinbauenden hochtourigen Gleichstrommotor als Antrieb für den Wellgenerator, insbesondere in der Kraftfahrzeugtechnik als Stellelement verbreitet Anwendung.

Als Wellgenerator im Wellgetriebe kann ein Exzenter dienen, der unmittelbar gegen die Innenmantelfläche des Flexbandes sich abstützend umläuft. Die daraus resultierende umlaufende lokale Anlage des Flexbandes gegen den Stützring kann aber im Interesse günstigerer Reibungspaarungen auch nur mittelbar vom rotierenden Exzenter hervorgerufen werden, nämlich mittels einer umlaufenden Längsverlagerung von in Umfangsrichtung des Getriebes speichenförmig nebeneinander angeordneten Stößeln, die ihrerseits, von einem in ihrer gemeinsamen Nabe zentral umlaufenden Exzenter beaufschlagt, nacheinander nur radial nach außen und wieder zurück bewegt werden. Bevorzugte Realisierungsbeispiele hierfür sind insbesondere in unseren älteren deutschen Patentanmeldungen 1 00 10 156.9 , 1 00 10 680.3 und 1 00 12 601.4 näher beschrieben, auf die hier zur Ergänzung vorliegender Offenbarung voll-inhaltlich Bezug genommen wird.

Aus der formal hier gattungsbildenden US 3,178,963 ist ein Getriebemotor mit integriertem Wellgetriebe anderer Bauart bekannt. Als Exzenter dient dort unmittelbar der Rotor eines Elektromotors, der an seinen beiden Stimenden mit untersetzenden Abtrieben für eine durchlaufende Antriebswelle ausgestattet ist. Dafür ist vor jeder Rotorstirn eine geneigt zur Rotorachse kugelgelagerte, kegelstumpfförmige Walze vorgesehen, welche die größere Basis eines Hohlkegelstumpfes mit seiner Außenverzahnung umlaufend über die Innenverzahnung eines gehäusefesten Ringes entsprechender Flankenneigung abwälzen läßt. In die gegenüberliegende, kleiner Basis des jeweiligen Hohlkegelstumpfes greift eine Hülse ein, die drehfest auf der im Motorgehäuse gelagerten Abtriebswelle sitzt. Solches ist eine im Vergleich zum einfachen Exzenter als Wellgenerator konstruktiv sehr aufwendige und kaum miniaturisierbare Lösung. Das gilt im Ergebnis auch für das in der US 4,382,391 enthaltene Wellgetriebe, bei dem ein von Kugeln umgebener Exzenter diese Kugeln nacheinander radial gegen den inneren Stirnrand einer konisch aufgeweiteten Hülse andrückt und dabei die Hülse mit einer Außenverzahnung über einen radial dahinter gelegenen gehäusefesten Stützring abwälzt.

Da die ringförmige Außenmantelfläche am offenen Stirnende der Wandung des Abtriebstopfes das Flexband darstellt, führt die umlaufende radiale Verlagerung des Flexbandes zu einer lokal umlaufenden hohlkegelstupmpfförmigen Verformung desjenigen Sektors der Topfwandung, die sich zum Topfboden hin axial an das Flexband anschließt. Denn die im Querschnitt lokal elliptische Verformung des Flexbandes bewirkt eine im Axial-Längsschnitt axial an das Flexband sich anschließende sektoriell kegelige Verformung des Abtriebstopfes. Wie nachstehend unter Bezugnahme auf Fig.1 der Zeichnung noch näher veranschaulicht, verbleibt das Flexband selbst aber, da radial zwischen Wellgenerator und Stützring eingefaßt, entsprechend deren einander benachbarten Flächenbereichen in eine hohlzylindrische Form gezwungen. Deshalb knickt die Erzeugende der Topfwandung am bodenseitigen Stirnende des Exzenters, also beim axialen Übergang vom Flexband zur sich zum Topfboden hin anschließenden Topfwandung, entsprechend scharfkantig ab. Dieser umlaufende kleinflächige Wechselbeanspruchungsbereich der Topfwandung in unmittelbarer axialer Nachbarschaft zum Kraftübertragungsbereich zwischen Flexband und Stützring ist hochgradig ermüdungsbruchgefährdet.

In Erkenntnis dieser Gegebenheiten liegt vorliegender Erfindung die technische Problemstellung zugrunde, ein gattungsgemäßes, also mit Abtriebstopf ausgestattetes Wellgetriebe dahingehend weiterzubilden, daß die Gefahr einer Betriebsstörung infolge mechanischer Überbeanspruchung jener umlaufend auf Biegung beanspruchten Zone am Übergang vom Flexband zum Bodenbereich der Topfwandung praktisch ausgeschaltet wird.

Die Aufgabe ist erfindungsgemäß durch die Ausgestaltung des Wellgetriebes nach dem Hauptanspruch gelöst, wonach die Innenmantelfläche des Stützringes und korrespondierend der Andrückbereich des Wellgenerators als Kegelmantelflächen ausgebildet sind. Da folglich dann auch der als Flexband wirkende, radial zwischen ihnen eingefaßte Stirnbereich der Topfwandung hohlkegelstumpfmantelflächenförmig geführt wird, ist die kriti-sche, umlaufende Knickstelle jedenfalls entschärft, praktisch sogar vermieden, zumal wenn der Kegelwinkel dem - von der Exzentrizität des Wellgenerators und der axialen Höhe der Topfwandung bestimmten - Betrag der umlaufenden seitlichen Auslenkung der Topfwandung angepaßt ist. Das stellt aber eine geometrisch problemlos zu realisierende Randbedingung dar.

Bei einem Wellgetriebe mit längs eines Flexbandes umlaufend exzentrisch verformbarem Abtriebstopf im gehäusefesten Stützring wird also die Wechsellast-Bruchgefahr der Topfwandung am zum Topfboden hinweisenden Rand der Exzenter-Stirn erfindungsgemäß dadurch vermieden, daß diese Stirnfläche und die Innenmantelfläche des Stützringes gegensinnig kegelstumpfwandungsförmig ausgelegt sind. Dadurch wird das Flexband in Richtung der lokal ovalen Verformung der Topfwandung zwischen diesen beiden Flächen radial konisch eingespannt, ohne eine längs der Topfwandung umlaufende Knickstelle am Übergang zum axial benachbarten Bereich dieses momentan verformten Sektors der Topfwandung hervorzurufen. Es kann dafür aber auch die Außenmantelfläche des Flexbandes von vornherein hohlkegelstumpfförmig ausgestaltet (bzw. einer Kegel-Innenverzahnung am Stützrad gegenüber mit einer korrespondierenden Kegel-Außenverzahnung ausgestattet) sein. Bei zylinderabschnittförmiger Stirn des Wellgenerators läuft der dann innerhalb eines innen hohlzylindrisch verbleibenden Flexbandes um.

Die grundsätzliche Lösung wird anhand der Zeichnung näher veranschaulicht, in der mittels eines ― hinsichtlich der lokal umlaufenden seitlichen Auslenkung der Topfwandung zur Verdeutlichung unmaßstäblich überzeichneten - Ausführungsbeispieles die herkömmliche und die erfindungsgemäße Flexbandführung einander gegenübergestellt sind. Dabei zeigt jeweils im Axial-Längsschnitt durch das Wellgetriebe mit seinem am freien Stirnrand des Abtriebstopfes gegen die Innenmantelfläche des gehäusefesten Stützrings angedrückten Flexband
- Fig.1: die herkömmliche zylindrische Führung und
- Fig.2: ein Beispiel für eine erfindungsgemäße kegelförmige Führung des Flexbandes.

Beim beispielhaft skizzierten, preisgünstig aus wenigen Kunststoff-Spritzgußteilen erstellbaren Wellgetriebe 11 ist in einem Gehäuse 12 ein formstabiler Stützring 13 festgelegt, in dem ein Abtriebstopf 14 mit seinem Wellenstumpf 15 koaxial so gelagert ist, daß die Topfwandung 16 - mit ihrem als Flexband 17 bezeichneten ringförmigen Bereich vor dem freien Stirnrand 18 der Topfwandung 16 - der Innenmantelfläche 19 des Stützringes 13 radial gegenübersteht. Als motorisch angetriebener Wellgenerator 19 ist symbolisch vereinfacht ein einarmig asymmetrischer, im Axial-Längsschnitt rechteckiger Exzenter 20 skizziert, der radial gegen die Innenmantelfläche der Topfwandung 16 anliegend rotiert und dafür mit seiner Antriebswelle 21 dem Abtriebs-Wellenstumpf 15 koaxial gegenüber, also konzentrisch zur Getriebeachse 27 drehbar im Gehäuse 12 gelagert ist.

Der Exzenter 20 drückt (wie zur Veranschaulichung bewußt übertrieben skizziert) einen Sektor des Flexbandes 17 lokal aus seiner ungestörten Kreisringform oval nach außen, bis zur Anlage gegen die stationäre Innenmantelfläche 19 mit ihrem gegenüber dem Flexband 17 etwas größerem Umfang. Mit Verdrehen des Exzenters 21 wälzt sich das Flexband 17 somit längs der Innenmantelfläche 19 des Stützringes 13 ab ― nach Maßgabe der Umfangsdifferenz sehr viel langsamer als die Drehbewegung des antreibenden Exzenters 21. Um dabei der Innenmantelfläche 19 gegenüber Schlupf zu vermeiden, erfolgt dieses Abwälzen des Flexbandes 17 gewöhnlich nicht kraftschlüssig, sondern formschlüssig mittels lokal umlaufenden Eingriffes des mit Außenverzahnung 23 versehenen Flexbandes 17 in die stationäre Innenverzahnung 24 auf der Innenmantelfläche 19 des Stützringes 13.

Während (Fig.1) im sektoriellen Bereich der vom Wellgenerator 20 umlaufend lokal erzwungenen radialen Verformung der Topfwandung 16 das Flexband 17 hohlzylinderabschnittförmig radial zwischen den Zylinderflächen der Anlagebereiche einerseits des Exzenters 21 und andererseits der Innenmantelfläche 19 des Stützringes 13 eingespannt ist, knickt dieser Wandungssektor am Ende jener Einspannung (also am bodenseitigen Rand des Exzenters 21) zum Topfboden 25 hin ab. Diese, infolge der vom Exzenter 21 erzwungenen umlaufenden Radialverformung, mit dem Exzenter 21 umlaufende Knickstelle 26 in der Erzeugenden der verformten Topfwandung 16 ist wegen ihrer kleinflächigen Wechselbeanspruchung überaus ermüdungsbruchgefährdet.

Solch eine betriebskritische Knickstelle (Position 26 in Fig.1) wird nun aber erfindungsgemäß dadurch vermieden, daß die Innenmantelfläche 19 des Stützringes 13 wie in Fig.2 skizziert hohlkegelstumpfförmig ausgelegt und dementsprechend gegebenenfalls mit einer kegeligen Innenverzahnung 24 ausgestattet wird. Wenn dann die innen gegen die Topfwandung 16 angreifende Fläche des Exzenters 21 ebenfalls - mit gleichem Öffnungswinkel dazu komplementär ― kegelstumpfförmig abgeschrägt ist, wird bei entsprechend bemessenem Kegelwinkel das mit der Kegel-Innenverzahnung 24 in Eingriff stehende Flexband 17 mit seiner an sich mehr oder weniger zylindrischen, hier aber der Achse 27 gegenüber entsprechend kegelig verformten Außenverzahnung 23 gerade um den Auslenk-Winkel 28 der Topfwandung 16 schräggestellt. Weil dann die Erzeugende des radial ausgelenkten Flexbandes 17 mit der axial anschließend ebenfalls verschwenkten Erzeugenden (nämlich derjenigen der übrigen Topfwandung 16 zum Topfboden 25 hin) fluchtet, tritt hier keine Knickstelle am dem Topfboden 25 zugekehrten Rand der Exzenter-Stirn 29 mehr auf.

Mit dem örtlichen Herausdrücken der Topfwandung 16 aus ihrer hohlzylindrischen Ruhestellung besteht diametral gegenüber die Tendenz zum sektoriell radialen Einbeulen der Topfwandung 16. Zweckmäßigerweise ist deshalb die Peripherie des Wellgenerators 20 wie gezeichnet dem Exzenter 21 diametral gegenüber für ein formschlüssiges Abstützen der Topfwandung 16 dementsprechend parallel zur Stirn 29 des Exzenters 21, also um den gleichen Kegel-Winkel 28 abgeschrägt. Der Wellgenerator 20 mit einarmigem Exzenter 21 und der von dessen Stirn 29 verformte Abtriebstopf 14 weisen dann im dargestellten Axial-Längsschnitt etwa den Umriß eines Parallelogramms auf. Weil also die Topfwandung 16 gegenüber dem Lot auf den Topfboden 25 umlaufend um den doppelten Kegelwinkel der Exzenter-Stirn 29 periodisch verschwenkt wird, ist zwischen Wandung 16 und Boden 25 ein zwar scherfester aber biegeweicher Anschlußbereich 30 vor, wie er in Fig.2 durch die Materialanhäufung im Innenwinkel veranschaulicht ist.

In Fig.2 ist ferner strichpunktiert angedeutet, daß der Wellgenerator 20 aber auch als zweiarmiger Exzenter 21 ausgelegt sein und dann (wie auch die verformte Topfwandung) im Axial-Längsschnitt die Umfangsform eines exzentrisch zur Drehachse 27 gelegenen symmetrischen Trapezes aufweisen kann. Infolge zweier einander diametral gegenüberliegender Eingriffsbereiche zwischen der stationären Innenmantelfläche 19 und dem darin sich abwälzenden Flexband 17 können dadurch ― sogar nun unter Vermeiden von Unwucht - insgesamt größere Kräfte übertragen werden.

## Patentansprüche

1. Wellgetriebe (11) mit einem um eine Drehachse (27) rotierend angetriebenen Exzenter (21), einem Flexband (17), einem gehäusefesten Stützring (13) und einem getriebenen topfförmigen Abtriebsring (14),
- wobei die Außenmantelfläche des Exzenters (21) einen ringförmigen Wandungsbereich des Flexbandes (17) umlaufend exzentrisch verformt und zur Anlage gegen eine Innenmantelfläche (19) des Stützringes (13) bringt, und
- wobei das Flexband (17) Teil einer Topfwandung (16) des Abtriebsringes (14) ist,
**dadurch gekennzeichnet,**
- **daß** die Innenmantelfläche (19) des Stützringes (13) kegelstumpfwandungsförmig ausgelegt ist, und
- **daß** die an den Wandungsbereich des Flexbandes (17) angreifende Außenmantelfläche des Exzenters (21) zur Innenmantelfläche (19) des Stützringes (13) komplementär kegelstumpfwandungsförmig ausgelegt ist.

2. Wellgetriebe nach Anspruch 1, **dadurch gekennzeichnet, daß** die Außenmantelfläche des Flexbandes (17) gegensinnig zur Innenmantelfläche (19) des Stützringes (13) kegelstumpfwandungsförmig ausgelegt ist.

3. Wellgetriebe nach einem der vorangehenden Ansprüche, **dadurch gekennzeichnet, daß** das Flexband (17) mit einer Außenverzahnng (23) und der Stützring (13) mit einer Kegel-Innenverzahnung (24) ausgestattet ist.

4. Wellgetriebe nach einem der vorangehenden Ansprüche, **dadurch gekennzeichnet, daß** der Abtriebstopf (14) mit einem biegeweichen aber scherfesten Anschlußbereich (30) zwischen Topfboden (25) und Topfwandung (16) ausgestattet ist.

5. Wellgetriebe nach einem der vorangehenden Ansprüche, **dadurch gekennzeichnet, daß** ein im Axial-Längsschnitt parallelogrammförmig berandeter Exzenter (21) vorgesehen, ist.

6. Wellgetriebe nach einem der Ansprüche 1 bis 4, **dadurch gekennzeichnet, daß** ein im Axial-Längsschnitt trapezförmig berandeter Exzenter (21) vorgesehen ist.

## Revendications

1. Réducteur planétaire (11) comprenant un excentrique (21) entraîné en rotation autour d'un axe de rotation (27), une bande flexible (17), une couronne d'appui (13) fixée au carter et une couronne menée (14) entraînée en forme de pot,
- la surface d'enveloppe extérieure de l'excentrique (21) déformant une région de paroi annulaire de la bande flexible (17) de manière excentrée au cours de sa rotation et l'amenant en butée contre une surface d'enveloppe intérieure (19) de la couronne d'appui (13), et
- la bande flexible (17) faisant partie d'une paroi de pot (16) de la couronne menée (14),
**caractérisé en ce que**
- la surface d'enveloppe intérieure (19) de la couronne d'appui (13) est réalisée avec une forme de paroi en cône tronqué et
- **en ce que** la surface d'enveloppe extérieure de l'excentrique (21) venant en prise contre la région de paroi de la bande flexible (17) est réalisée de manière complémentaire en forme de paroi en cône tronqué par rapport à la surface d'enveloppe intérieure (19) de la couronne d'appui (13).

2. Réducteur planétaire selon la revendication 1, **caractérisé en ce que** la surface d'enveloppe extérieure de la bande flexible (17) est réalisée en forme en forme de paroi en cône tronqué dans le sens inverse par rapport à la surface d'enveloppe intérieure (19) de la couronne d'appui (13).

3. Réducteur planétaire selon l'une quelconque des revendications précédentes, **caractérisé en ce que** la bande flexible (17) est pourvue d'une denture extérieure (23) et la couronne d'appui (13) d'une denture intérieure conique (24).

4. Réducteur planétaire selon l'une quelconque des revendications précédentes, **caractérisé en ce que** le pot mené (14) est pourvu d'une région de raccordement (30) déformable en torsion mais rigide en cisaillement entre le fond du pot (25) et la paroi du pot (16).

5. Réducteur planétaire selon l'une quelconque des revendications, **caractérisé en ce qu'**il est prévu un excentrique (21) à bords en forme de parallélogramme en coupe longitudinale axiale.

6. Réducteur planétaire selon l'une quelconque des revendications 1 à 4, **caractérisé en ce qu'**il est prévu un excentrique (21) à bords en forme de trapèze en coupe longitudinale axiale.

## Claims

1. A shaft gear (11) comprising a driven eccentric (21) revolving about a rotation axis (27), a flexible strip (17), a bearing ring (13) fixed in the housing, and a cup-shaped output ring (14)
- whereby the outer surface area of the eccentric deforms eccentrically and revolvingly an annular wall section of said flexible strip (17) and pushes it to make contact against an inner surface area (19) of said bearing ring (13), and whereby
- said flexible strip (17) is part of the cup wall (16) of the output ring (14),
**characterized in**
- **that** the inner surface area 19 of said bearing ring (13) is designed having truncated conical walls and
- **that** the outer surface area of said eccentric (21) engaging the wall section of said flexible strip (17) is designed having truncated conical wall that complement the inner surface area (19) of said bearing ring (13).

2. A shaft gear according to claim 1, wherein the outer surface area of said flexible strip (17) is designed having inverted truncated conical walls in contrast to the ones of said inner surface area (19) of said bearing ring (13).

3. A shaft gear according to one of the previous claims, wherein said flexible strip (17) is equipped with an outer gear-tooth system (23) and said bearing ring (13) is equipped with a conoidal inner gear-tooth system (24).

4. A shaft gear according to one ofthe previous claims, wherein said output cup (14) has a resilient but shear-resistant connecting area (30) between the cup base (25) and the cup wall (16).

5. A shaft gear according to one of the previous claims, wherein an eccentric (21) is provided having an edge in the contour of a parallelogram in its axial, longitudinal section.

6. A shaft gear according to one of the claims 1 through 4, wherein an eccentric (21) is provided having an edge in the contour of a trapezoid in its axial, longitudinal section.
